Europäisches Patentamt

European Patent Office

Office européen des brevets

(19)

(11) **EP 0 924 587 A1**

(12) **EUROPÄISCHE PATENTANMELDUNG**

(43) Veröffentlichungstag:
23.06.1999 Patentblatt 1999/25

(51) Int. Cl.$^6$: **G05D 23/19**, G05B 9/03

(21) Anmeldenummer: 98123398.4

(22) Anmeldetag: 09.12.1998

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **19.12.1997 DE 19756510**

(71) Anmelder:
**KENDRO Laboratory Products GmbH
63450 Hanau (DE)**

(72) Erfinder:
• **Loscher, Helmut**
**61130 Nidderau (DE)**
• **Heeg, Hubert**
**63776 Mömbris (DE)**

(74) Vertreter: **Kühn, Hans-Christian
Heraeus Holding GmbH,
Stabsstelle Schutzrechte,
Heraeusstrasse 12-14
63450 Hanau (DE)**

(54) **Verfahren und Vorrichtung zur Regelung der Temperatur eines in einem Behandlungsraum zu behandelnden Gutes**

(57)     Zur Regelung der Temperatur im Behandlungsraum eines Brutschrankes mit einer Stör-Schutz-Funktion sind zwei Temperatur-Sensoren zur Erfassung von Temperatur-Istwerten bzw. Sensor-Signalwerten vorgesehen, die zusammen mit ihrer zugehörigen Peripherie einer Plausibilitäts-Kontrolle unterworfen werden, bei der die Sensor-Signale einen vorgegebenen Differenzwert nicht überschreiten dürfen; weiterhin wird bei Erfüllen der Plausibilitäts-Bedingung ein Übergang der Regelung von einem ersten Regelkreis zu einem übergeordneten Regelkreis mit einer Regler/Kontrollvorrichtung vorgenommen, sofern bei einem Fehler im Regelkreis - beispielsweise dauernd geschlossener Kontakt des Stellgliedes für die Temperierung - der Temperatursensor-Signalwert (Istwert) ein vom Sollwert vorgegebenes Fehler-Toleranzband über- oder unterschreitet.

Fig. 1

EP 0 924 587 A1

**Beschreibung**

Die Erfindung betrifft ein Verfahren zur Temperatur-Regelung eines zu behandelnden Gutes in einer gegenüber der Umgebungsatmosphäre abgeschlossenen Atmosphäre eines Behandlungsraumes mittels Temperatur-Sollwert/-Istwert-Vergleich in einem ersten und in einem zweiten Regelkreis, wobei durch wenigstens zwei voneinander unabhängige Temperatur-Sensoren im Behandlungsraum ermittelte Temperatur-Istwerte einer Prüfung auf Plausibilität mit einem vorgegebenen Differenz-Schwellwert unterworfen werden, wobei eine Nichterfüllung der Plausibilitätsbedingung eine Signal-Ausgabe sowie eine Unterbrechung der Energiezufuhr zur Temperierung des Behandlungsraumes zur Folge hat, sowie eine Vorrichtung.

Aus der DE 31 00 273 A1 ist ein ausfall- und driftsicherer Temperaturregler bekannt, wobei der im Behandlungsraum eines Ofens ermittelte Temperatur-Istwert durch zwei Sensoren ermittelt wird, und anschließend mittels eines Komperators eine Plausibilitätskontrolle durchgeführt wird, wonach der Unterschied der zwei Temperatur-Signale innerhalb eines vorgegebenen Toleranzbereiches liegen muß, um die Plausibilität zu gewährleisten; als Voraussetzung wird dabei angenommen, daß ein gleichgroßer Fehler bei zwei Temperaturreglern bzw. Sensoren höchst unwahrscheinlich gleichzeitig auftritt.

Weiterhin ist es aus dieser Druckschrift bekannt, mit Hilfe einer Logikanlage, die mindestens zwei Thermometer prüft, bei einer zu großen Temperaturabweichung nicht nur ein Warnsignal auszugebens, sondern die Regelung der Temperatur in einem Behandlungsraum von einem ersten Regler auf einen zweiten Regler übertragen zu lassen; als Prüfmerkmale dienen dabei z.B. Differenz zwischen Sollwert und Istwert, der Speisestrom des Instrumentes, Lage des Endschalters in den Instrumenten, Dauer von Ausbleiben eines neuen Befehls für die Änderung der Stellgröße. Darüberhinaus kann der Komparator während einer Aufheiz- oder Abkühlungsphase der Wärmebehandlungsanlage blockiert werden.

Weiterhin ist aus der DE 82 29 723 U1 ein Temperatursteuergerät mit einem ersten durch ein erstes temperaturempfindliches Element gesteuerten ersten thermostatischen Schalter und einem durch ein zweites temperaturempfindliches Element gesteuerten zweiten thermostatischen Schalter bekannt, der durch das zweite temperaturempfindliche Element bei einer bestimmten Grenztemperatur außerhalb des Bereichs der Betriebstemperatur einschaltbar ist, wobei der zweite thermostatische Schalter neben dem Ersten angeordnet ist und ein Bauteil zum Rückstellen von Hand aufweist, wobei neben dem zweiten thermostatischen Schalter ein dessen Schaltzustand anzeigendes Anzeigeelement angeordnet ist. Mit einem solchen Steuergerät soll bei Einsatz an einem Tiefkühlgerät warnend angezeigt werden, wenn der Normalzyklus der Steuerung innerhalb des Temperaturarbeitsbereiches gestört worden ist, wie z.B. bei längerem Netzausfall.

Als problematisch erweist es sich dabei, daß trotz Erfüllung der Plausibilitätsbedingung der Temperatursensoren zusätzliche Defekte im Regelkreis auftreten können, wie beispielsweise eine Fehlansteuerung von Stellgliedern, die beispielsweise einen dauernd geschlossenen Kontakt zur Folge haben können.

Weiterhin ist aus der DE 21 33 119 B2 ist ein Inkubator bekannt bei dem Wasser als umlaufendes Fluid eingesetzt ist, wobei das Wasser mittels einer Temperaturregelung auf einem konstanten Temperaturniveau wie beispielsweise 37°C gehalten wird. Als problematisch erweist es sich, wenn ein Fehler im Beheizungssystem des Gerätes auftritt, wobei dann beispielsweise durch Überhitzung eine Gefährdung des im Nutzraum befindlichen Guts - wie bespielsweise Zellkulturen - auftreten kann. Dies gilt auch für das Unterschreiten vorgegebener Temperaturen bei einem Totalausfall der Heizung; weiterhin ist es möglich, daß auch Einzelelemente des Regelkreises wie beispielsweise der Temperatursensorausfall und eine ungeregelte Situation auftritt, die zu einer Zerstörung von Zellkulturen führen kann.

Aufgabe der Erfindung ist es, einen Schutz von Behandlungsgut - insbesondere von Zellkulturen - gegen eine Zerstörung durch übermäßige Erwärmung bzw. zu starke Abkühlung aufgrund von Defekten oder Bauteil-Driften im Regelkreissystem zu schaffen, wie sie beispielsweise durch Sensordrift bei Temperatursensoren oder durch defekte Stellglieder auftreten kann; darüberhinaus soll auch die Möglichkeit eines raschen Einsatzes von Bedienungspersonal bei einem Systemfehler angestrebt werden.

Die Aufgabe wird erfindungsgemäß für ein Verfahren dadurch gelöst, daß bei Erfüllung der Plausibilität durch Über- oder Unterschreiten eines vorgegebenen Temperatur-Sollwertes (W1) um ein einstellbares Toleranzband die Regelung von dem ersten Regelkreis auf den zweiten Regelkreis mit einer Regler/Kontrollvorrichtung und einem eigenen Stellglied übertragen wird.

Als vorteilhaft erweist es sich, daß der komplette Regelkreis mitsamt seinem Sensor und Stellglied zusätzlich durch eine Kontrolleinrichtung überwacht wird, so daß ein eventueller Fehler im Regelkreis bzw. Sensorsystem nicht mehr zu einer Zerstörung des zu behandelnden Gutes - beispielsweise von Zellgut - wegen eventueller Überhitzung bzw. Unterkühlung möglich ist.

In einer bevorzugten Ausführungsform des Verfahrens wird als Nichterfüllung der Plausibilitäts-Bedingung gewertet, wenn ein Überschreiten eines vorgegebenen Differenzwertes zwischen beiden Temperatursensor-Signalen vorliegt; der Differenzwert kann hierbei noch in Abhängigkeit der Soll-Istwert-Differenz bzw. des Absolutwertes variabel eingestellt werden.

Bei Nichterfüllung der Plausibilitäts-Bedingung

wird von der Regler/Kontrolleinrichtung ein Stell-Signal zur Temperierung der Nutzraum-Atmosphäre ausgegeben; dies bedeutet in der Praxis, daß die Kontrolleinrichtung die Energiezufuhr zur Temperierung der Nutzraum-Atmosphäre unterbricht.

Als besonders vorteilhaft erweist es sich, daß die Nutzraumtemperatur über zwei getrennte Erfassungssysteme ermittelt wird; dabei werden diese beiden Temperaturen bzw. deren Sensor-Signalwerte zyklisch miteinander verglichen; als vorteilhaft erweist es sich, daß bei Sensor-Signalwerten außerhalb des spezifischen Plausibilitätsbandes des angewählten Meß- und Regelbereiches eine bleibende Abschaltung mit Fehlermeldung erfolgt.

Wird bei Erfüllung der Plausibilitätsbedingung für beide Sensor-Signale S1, S2 der Sollwert W1 um ein einstellbares Toleranzband über- oder unterschritten, wird die Regelung von der Regler/Kontrollvorrichtung und dem mit ihrem Ausgang verbundenen Stellglied als übergeordnetem Regelkreis übernommen; liegt die gemessene Temperatur unterhalb des Toleranzbandes und ist die Fehlerzeit abgelaufen, erfolgt eine Fehlermeldung: "Temperatur unter"; liegt dagegen die Temperatur oberhalb des Toleranzbandes erfolgt eine Fehlermeldung "Temperatur über" und eine Übernahme der Temperaturregelung durch ein Programm "Gutschutz" in der Regler/Kontrollvorrichtung mit einem angeschlossenen Netztrennrelais als Stellglied.

Als besonders vorteilhaft erweist es sich, daß nach dem Verfahren bei Überschreitung des oberen Toleranzbandwertes über das allpolige Netztrennrelais auf den eingestellten Temperatur-Sollwert W1 weiter geregelt werden kann.

Die Aufgabe wird für eine Vorrichtung zur Regelung der Temperatur eines in einem Behandlungsraum mit gegenüber der Umgebung abschließbaren Atmosphäre zu behandelnden Gutes, wobei wenigstens ein erster und ein zweiter Regelkreis vorgesehen sind, und jeweilige Regler-Eingänge für ein Istwert-Signal jeweils mit einem Temperatur-Sensor im Behandlungsraum verbunden sind, von denen ein erster mit einem ersten Eingang und ein zweiter mit einem zweiten Eingang eines Vergleichsmoduls zwecks Istwert-Signal-Differenzwert-Bildung und Plausibilitäts-Prüfung der Sensor-Signale auf Überschreiten eines vorgegebenen Differenz-Schwell-Wertes verbunden sind und der Ausgang wenigstens eines Reglers mit einem ansteuerbaren Stellglied zur Temperierung der Behandlungsraum-Atmosphäre verbunden ist, dadurch gelöst, daß der Ausgang des Vergleichmoduls jeweils mit dem Eingang eines Reglers des ersten Regelkreises und dem Eingang einer Regler/Kontrollvorrichtung als Regler des zweiten Regelkreises verbunden sind.

In einer bevorzugten Ausgestaltung übernimmt ein Digital-Rechner die Funktionen von Vergleichsmodul, Regler und Kontrollvorrichtung, wobei der digitale Sensor über ein Bus-System mit einem Haupt-Prozessor als Teil des Vergleichsmoduls verbunden ist; der Temperatur-Sensor mit Dünnschicht-Meßwiderstand und nachgeschalteter Verstärkerschaltung ist mit einem angeschlossenen Analog/Digital-Wandler versehen, der ebenfalls mit dem Bus-System verbunden ist. Die Signalausgabe der Kontrollvorrichtung ist mit einer Warneinrichtung und einem Stellglied verbunden und das Stellglied ist von einem Regler der Kontrolleinrichtung ansteuerbar.

Als vorteilhaft erweist es sich, daß ein Schluß im Gerätebeheizungssystem (z.B. Stellglied bleibend geschlossen) eindeutig detektiert werden kann. Ist der gemessene Temperaturwert plausibel (d.h., es liegen beide Temperatursensor-Signale innerhalb des Plausibilitätsbandes) und ein einstellbarer Toleranzbandwert um den Sollwert wird überschritten, so wird mittels eines übergeordneten, allpolig schaltenden Schaltelementes als Stellglied und eines speziellen Softwaremoduls in der Regler/Kontrollvorrichtung die Betätigung des Heizungssystems übernommen. Dadurch kann auf den eingestellten Sollwert W1 wieder abgeregelt und auf diesem weitergeregelt werden. Das Toleranzband dient hier als Triggerband zur Aktivierung dieser Funktion genannt "Gutschutz".

Im folgenden ist der Gegenstand der Erfindung anhand der Figuren 1, 2, 3a, 3b und 4 näher erläutert.

Figur 1 zeigt schematisch einen Brutschrank bzw. Inkubator mit seinem Behandlungsraum und der zugehörigen Peripherie wie Regler, Temperiervorrichtung und Kontrolleinrichtung;

Figur 2 zeigt in einem Flußdiagramm schematisch den Verfahrensablauf bei verschiedenen möglichen Fehlern

Figur 3a stellt schematisch den zeitlichen Temperatur-Verlauf des Führungs-Istwertes innerhalb eines Toleranzband-Plausibilitätswerts dar, wobei das Toleranzband nach Erreichen des Sollwertes geringfügig eingeschränkt werden kann; die Zeitachse ist mit t, die Temperaturachse mit T bezeichnet.

Figur 3b zeigt einen Fehlerfall, bei dem das Plausibilitäts-Toleranzband durch den Kontroll-Istwert S2 verlassen wird, während der Führungs-Istwert S1 den auf 37° eingestellten Sollwert in Richtung eines Temperaturanstiegs, der z.B. durch eine Sensor-Drift vorgetäuscht sein kann, verläßt; nach Auftreten des Fehlefalls kühlt das Gerät ab, so daß sowohl der Führungs-Istwert als auch der Kontroll-Istwert einem zeitlichen Temperaturabfall unterworfen werden;

Figur 4 zeigt einen Fehlerfall, bei dem die definierbare Soll-Istwertdifferenz (Fehlertoleranzband) überschritten wird; die Zeitachse ist mit t, die Temperaturachse mit T bezeichnet.

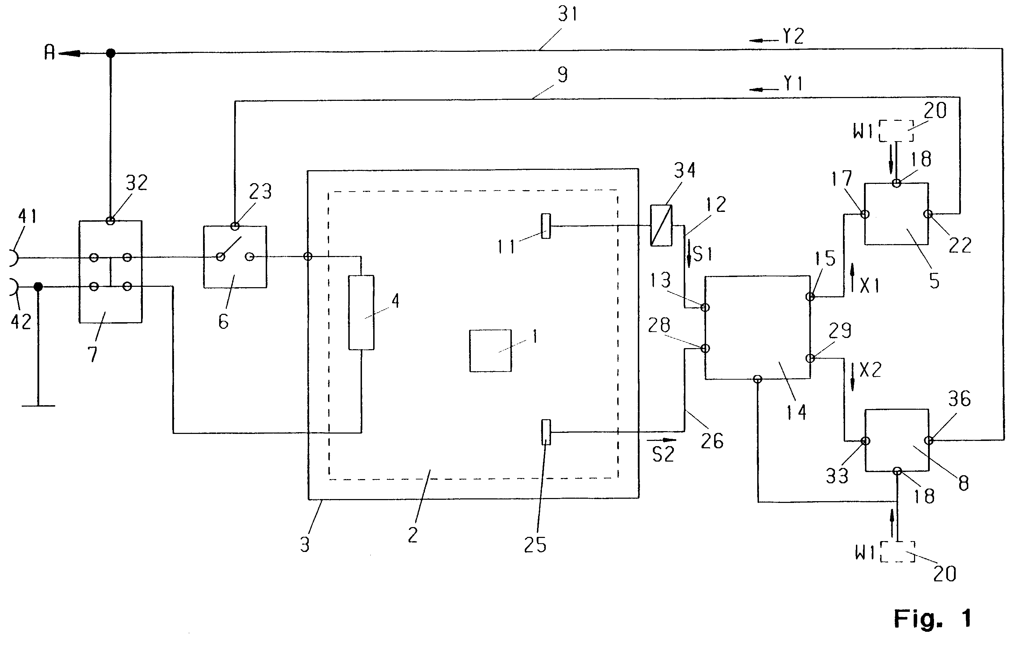

Gemäß Figur 1 befindet sich das zu behandelnde Gut 1 im Behandlungsraum 2 eines Brutschrankes 3, welcher hier jedoch nur schematisch dargestellt ist; die Temperierung des zu behandelnden Guts 1 - wie beispielsweise eine Zellenkultur - erfolgt durch Temperierglied 4, welches seine Ansteuerung über Stellglieder 6, 7 über einen als Regler dienenden Regler-Modul 5 und einer Regler/Kontrollvorrichtung 8 (mit Reglerfunktion) erhält; die Übertragung der Stellsignale von Reglermodul 5, die mit Y1 bezeichnet sind, erfolgt über Leitung 9. Innerhalb des Behandlungsraumes 2 ist ein erster Temperatursensor 11 angeordnet, welcher vorzugsweise einen Meßwiderstand - wie z.B. Platinwiderstand Pt 1000 - aufweist; der erste Temperatursensor 11 umfaßt in der praktischen Ausgestaltung eine elektronische Verstärker-Schaltung. Der Temperatursensor 11 ist über einen Analog-Digitalwandler 34 sowie über Leitung 12 mit dem ersten Eingang 13 eines Vergleichsmoduls 14 verbunden, wobei die im Behandlungsraum 2 gemessene Temperatur in Form eines Sensor-Signals S1 zum Eingang 13 des Vergleichsmoduls 14 übertragen wird; das Vergleichsmodul 14 hat zwei Ausgänge, von denen ein erster Ausgang 15 zur Übertragung eines zu S1 proportionalen Signals X1 mit Eingang 17 des Reglermoduls 5 verbunden ist; gleichzeitig ist Reglermodul 5 über seinen zweiten Eingang 18 mit einem Signalgeber 20 verbunden welcher einen Temperatur-Sollwert W1 vorgibt; der Sollwert kann über die Zeit gesehen konstant sein oder als eine zeitliche Funktion ausgebildet sein (Zeitplanregelung der Temperatur)

Innerhalb des Reglers 5 wird durch Differenzbildung zwischen den an den Eingängen 17 und 18 liegenden Signalen X1 und W1 die Regelabweichung als Zeitfunktion ermittelt und zur möglichst raschen Angleichung des ermittelten Temperatur-Istwertes X1 an den vorgegebenen Sollwert W1 über Ausgang 22 das Stellsignal Y1 an den Eingang 23 des Stellgliedes 6 geleitet, womit Temperierglied 4 - z.B. als Heizelement - angesteuert wird.

In der Praxis werden die Parameter des Regler-Moduls der durch Temperierglied 4 und Behandlungsraum 2 mit Temperatursensor 11 gebildeten Regelstrecke mittels praktischer Versuche angepaßt; dabei wird ein möglichst stabiler Betrieb von Regler und Regelstrecke angestrebt. Der Regler der ebenfalls an Vergleichsmodul 14 angeschlossenen Regler/Kontrollvorrichtung 8 weist einen dem Reglermodul 5 entsprechenden Aufbau auf, wobei hier auch der gleiche Sollwert W1 zugrunde gelegt wird, wie er von Signalgeber 20 ausgegeben wird. In einer bevorzugten Ausführungsform sind Vergleichsmodul, Reglermodul und Kontrollvorrichtung als Programm-Module eines Digitalrechners aufgebaut.

Um eine Überwachung des Regelungsvorganges sicherzustellen, ist ein zusätzlicher - d.h. zweiter, vorzugsweise digitaler - Temperatursensor 25 innerhalb des Behandlungsraumes 2 eingesetzt, welcher über Leitung 26 und Eingang 28 mit dem Vergleichsmodul 14 verbunden ist, das beispielsweise als digitaler Rechner ausgeführt ist. Dabei wird durch den ersten Temperatursensor 11 und mittels des zweiten Kontroll-Temperatursensors 25 (als Halbleiterelement ausgebildet) fortlaufend die im Behandlungsraum 2 vorherrschende Temperatur gemessen; hierzu wird unabhängig vom Regelkreis mit Regler 5 mittels Vergleichsmodul 14 festgestellt, ob das am Eingang 28 des Vergleichsmoduls 14 anliegende Signal S2 von Temperatursensor 25 gegenüber dem am Eingang 13 anliegenden Signal S1 des ersten Sensors 11 noch innerhalb einer erlaubten Temperaturdifferenz liegt, die durch einen Plausibilitätsbereich (später als W3 bezeichnet) vorgegeben wird oder ob bereits der Reglerkreis mit Regler 5 deaktiviert werden muß, da die Temperaturdifferenz zwischen beiden Temperatur-Meß-Signalen S1 und S2 so groß ist, daß die Kontrolle nunmehr von der am Ausgang 29 des Vergleichsmoduls 14 angeschlossenen Regler/Kontrolleinrichtung 8 vorgenommen werden muß; analog zu Temperatursensor-Signal S1 und dem entsprechenden elektrischen Signalwert X1, wird mit S2 das Temperatursensor-Signal, mit X2 der elektrische Signalwert bezeichnet, der dem Eingang 33 der Regler/Kontrolleinrichtung 8 zugeführt wird.

Das bedeutet, daß um den Temperatursignalwert S1 des ersten Temperatur-Sensors 11 ein Fehler- und Plausibilitätsband gelegt wird, das einen zeitlichen Vergleichsbereich für einen näherungsweise gleichsinnigen zeitlichen Verlauf zwischen dem Führungs-Temperatur-Sensor-Signalwert S1 des Temperatursensors 11 und dem Kontroll-Temperatursensor-Signal S2 des ebenfalls im Behandlungsraum 2 angeordneten zweiten Temperatur-Sensors 25 bilden soll; sobald die Differenz zwischen den beiden Temperatursensor-Signalwerten S1 und S2 einen vorgegebenen Plausibilitätswert überschreitet, wird vom Vergleichsmodul 14 zusammen mit der Regler/Kontrolleinrichtung 8 über Ausgang 36 ein Warnsignal ausgelöst, das beispielsweise auch über eine Fernmeldeleitung an einen weit entfernten Ort übertragen werden kann; weiterhin wird gleichzeitig ein Steuersignal Y2 über Leitung 31 dem Eingang 32 des Stellgliedes 7 zwecks Öffnen der elektrischen Kontakte zugeführt, um Temperierglied 4 allpolig bleibend abzuschalten. Hier kommt es darauf an, daß mit der Umschaltung auf die Steuer-Leitung 31 mittels Stellsignal Y2 auch gleichzeitig eine Warnung des Bedienungspersonals erfolgt, die symbolisch mit A bezeichnet ist; die Anschlußklemmen für die Stromversorgung von Stellglied 7 sind mit 41, 42 bezeichnet.

Der apparative Aufbau entspricht im Wesentlichen einer üblichen Brutschrankeinrichtung, wie sie beispielsweise aus DE 29 24 446 bzw. DE 33 15 085 C2 bekannt ist.

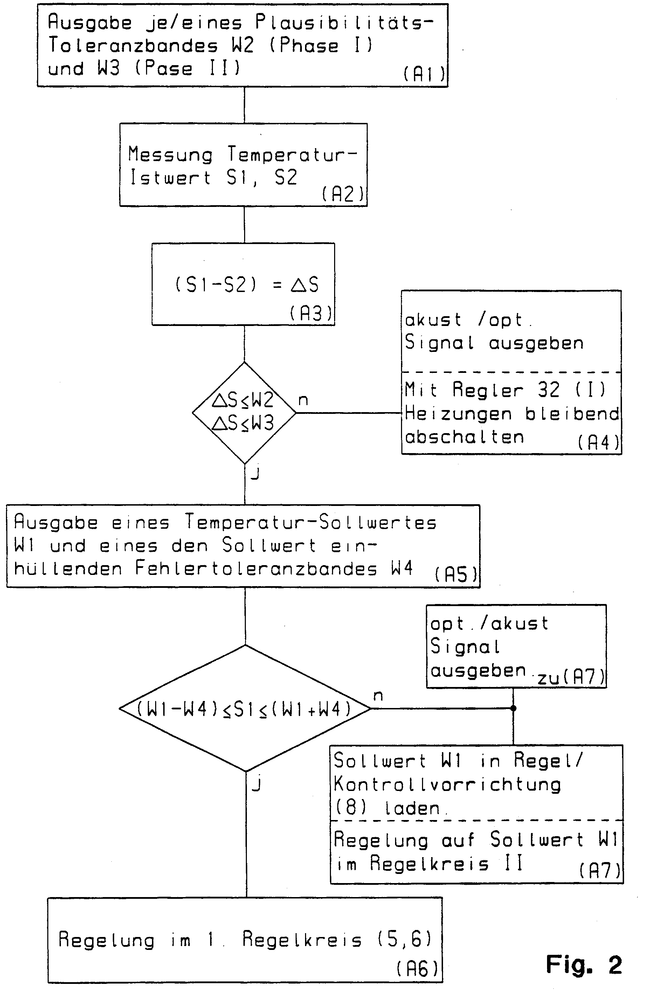

Gemäß Figur 2 werden in einem ersten Schritt A1 die Plausibillitats-Toleranzbänder W2 für Aufheiz-Phase (I) und W3 für Inkubations-Phase (II) vorgegeben, in denen die Differenz zwischen zwei im Behandlungsraum ermittelten Sensor-Signalen S1, S2 bzw. zwischen deren elektrischen Signalwerten X1, X2 liegen darf.

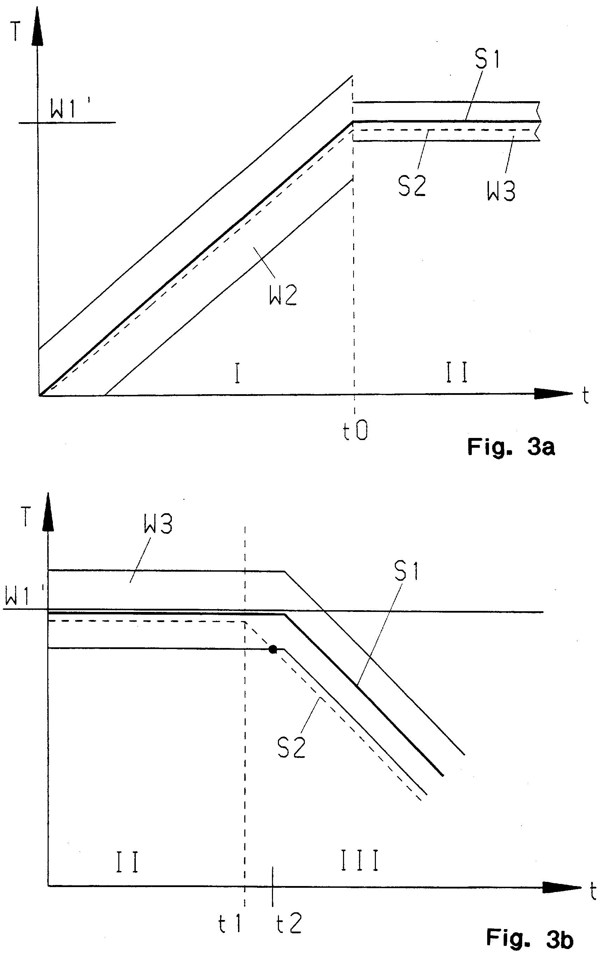

Dann werden in Schritt (A2) zunächst die Temperatur-Istwerte S1 und S2 im Behandlungsraum ermittelt und als elektrische Signale X1, X2 zu einer Differenzwertbildung $|S1-S2| = \Delta S$ im Schritt (A3) weitergeführt; zwecks Vereinfachung werden im Weiteren nur die Bezeichnungen der Temperaturwerte S1, S2 an Stelle der Signalwerte X1 und X2 genannt. In der anschließenden Entscheidung wird geprüft, ob in der Aufheizphase (I) gemäß Figur 3a $\Delta S \leq W2$ bzw. in der Inkubationsphase (II) gemäß Figur 3a und 3b $\Delta S \leq W3$ gilt; falls diese Bedingung nicht erfüllt ist, muß gemäß Figur 3b davon ausgegangen werden, daß eines der beiden Temperatur-Istwert-Signale S1, S2 falsch ist, d.h., daß einer der beiden Temperatur-Sensoren fehlerhaft arbeitet; da somit eine Kontrolle des anderen Sensors bzw. seines Istwert-Signals nicht mehr möglich ist, wird zum Schutz des zu behandelnden Guts die Energiezufuhr zur Temperierung des Behandlungsraums unterbrochen und ein akustisches und/oder optisches Warn-Signal ausgegeben (Schritt A4); nach Unterbrechung der Energiezufuhr beginnt die Temperatur zu sinken (Figur 3b).

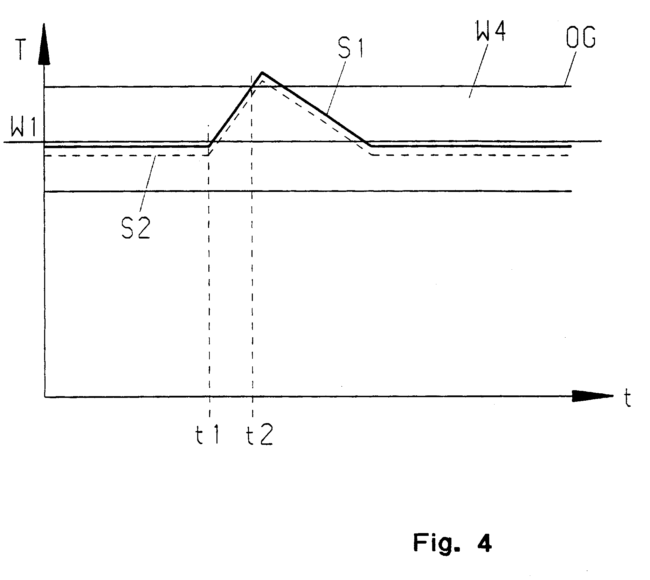

Falls jedoch die Bedingung $\Delta S \leq W2$ (Phase I) bzw. $\Delta S \leq W3$ (Phase II) erfüllt wird, kann von einer korrekten Temperaturmessung ausgegangen werden; gemäß Figur 4 bleibt der Temperatur-Istwert S1 (ebenfalls auch Temperatur-Istwert S2 bei erfüllter Plausibilitätsbedingung) zunächst innerhalb des Fehlertoleranzbandes W4 zwischen (W1-W4) als Untergrenze und (W1+W4) als Obergrenze.

Sollte jedoch ein Fehler im 1. Regelkreis - beispielsweise durch Dauerkurzschluß im Schaltkontakt des Stellgliedes 6 - auftreten, würde die Temperatur im Behandlungsraum kontinuierlich ansteigen bis das Temperatur-Signal S1 (bzw. auch S2) die Obergrenze (W1+W4) überschreitet und damit das Fehlertoleranzband verlassen wird; in diesem Fall ist die Bedingung (W1-W4) $\leq$ S2 $\leq$ (W1+W4) nicht mehr erfüllt, so daß gemäß Schritt A7 der Sollwert W1 in die Regel/Kontrollvorrichtung 8 geladen wird und die Temperatur-Regelung im Behandlungsraum durch den aus Regler/Kontrollvorrichtung 8 und Stellglied 7 bestehenden 2. Regelkreis weitergeführt wird. Gleichzeitig wird im Schritt A7 ein optisches bzw. akustisches Signal ausgegeben, damit das Betriebspersonal die Fehler-Situation im 1. Regelkreis zur Kenntnis nimmt.

Anhand Figur 3a ist der zeitliche Temperaturverlauf der Aufheizphase I und der Inkubationsphase II im Behandlungsraum 2 (gemäß Figur 1) dargestellt; da aufgrund der verhältnismäßig großen Sensormasse in der Aufheizphase I erhebliche Temperaturschwankungen auftreten können, soll die Plausibilitätskontrolle der beiden Temperatursensor-Signalwerte S1 und S2 in einem verhältnismäßig weiten Plausibilitäts-Toleranzband W2 von beispielsweise $\pm$ 5°C um den ersten Temperatursensor-Signalwert S1 erfolgen können; nach Erreichen des Sollwertes W1' (beispielsweise Temperatur-Sollwert entsprechend 37°) beginnt ab Zeitpunkt $t_0$ die Inkubationsphase II mit einem "verschärften" (also verengten) Plausibilitäts-Toleranzband W3 (z.B. $\pm$ 2°C) um den ersten Temperatursensor-Signalwert S1, so daß an die Plausibilität der beiden Temperatursensor-Signalwerte S1 und S2 erhöhte Anforderungen gestellt werden.

Figur 3b stellt einen weiteren Verlauf der Inkubationsphase II (in Fortsetzung der Phase II nach Figur 3a) dar;

Anhand Figur 3b ist erkennbar, daß Temperatursensor 11 (gemäß Figur 1) mit seinem Temperatursensor-Signalwert S1 einer Drift (z.B. positiver Drift) unterliegt und somit der zweite Temperatursensor-Signalwert S2 das Plausibilitäts-Toleranzband W3 verlassen wird; dies bedeutet, daß eine Plausibilitätskontrolle ergibt, daß die Temperaturdifferenz den Toleranzbandwert überschreitet und somit die Eindeutigkeit beider Temperatursensor-Signalwerte nicht mehr gegeben ist; d.h., daß wenigstens einer der beiden Temperatursensoren 11, 25 bzw. die zugehörige Peripherie defekt ist; in diesem Fall wird mittels der Regler/Kontrolleinrichtung 8 eine bleibende Abschaltung von Temperierglied 4 und eine Auskühlung des Behandlungsraums des Gerätes vorgenommen, sofern es sich bei Temperierglied 4 um ein Heizelement handelt.

Im Zeitpunkt $t_1$ gemäß Figur 3b, beginnt eine positive Drift des Temperatursensor-Signalwertes S1, der also zu einem Absinken der Temperatur im Behandlungsraum führt und folglich bewirkt, daß der zweite Temperatursensor-Signalwert S2 aus dem Toleranzband durch Passieren der Untergrenze der Plausibilitätswerte das Toleranzband verläßt und über Vergleichsmodul 14 (gemäß Figur 1) die mangelnde Plausibilität beider Temperatur-Signalwerte S1 und S2 festgestellt wird.

Da es für das Vergleichssystem nicht erkennbar ist, welcher der beiden Temperatursensoren 11 oder 25 einen fehlerhaften Temperatursensor-Signalwert liefert, wird im Zeitpunkt $t_2$ der sogenannte "Fehlerfall" ausgelöst und die Energieversorgung des Temperiergliedes 4 eingestellt; in der Praxis bedeutet dies, daß gemäß Figur 1 Stellglied 7 den Stromkreis des Temperiergliedes 4 allpolig unterbricht, so daß bei einem vorherigen Heizvorgang (Inkubationsphase) beide Temperatursensor-Signalwerte S1 und S2 aufgrund des Fehlerfalls in Phase III (über der Zeit t gesehen) absinken.

Anhand der Figur 4 ist die sogenannte "Gutschutz"-Funktion erläutert, wie sie bei einem eventuellen Fehler im Regelkreis - z.B. Kontakt des Stellgliedes 6 gemäß Figur 1 bleibt dauerhaft geschlossen - wirksam werden kann.

Solange der von Temperatursensor 11 gemessene Temperatur-Signalwert S1 innerhalb eines frei definierbaren Fehler-Toleranzbandes W4 um den Temperatur-Sollwert W1 in Vergleichsmodul 14 nach Figur 1 liegt, wird die Regler/Kontrolleinrichtung 8 im Hinblick auf eine Temperierung des Behandlungsraumes nicht aktiv; im Gegensatz zu einem Sensorfehler (Figur 3a, 3b) ist zwar die Plausibilität der von den Temperatursensoren ermittelten Temperatursensor-Signalwerte S1 und S2 gegeben, doch ist vom Zeitpunkt $t_1$ an ein Anstieg beider Temperatursensor-Signalwerte zu erkennen, wobei ggf. bei Überschreiten der Grenze des Fehler-Toleranzbandes zum Zeitpunkt $t_2$ sofort die Verbindung des Temperiergliedes 4 über Stellglied 7, gemäß Figur 1 allpolig deaktiviert wird und die Regelung auf den eingestellten Temperatursollwert W1 durch die als (digitaler) Regler wirkende Regler/Kontrolleinrichtung 8 übernommen wird.

Im Falle einer Fehlansteuerung von Stellglied 6 (Kontakte von Stellglied 6 bleiben stets geöffnet) ist es zudem möglich eine zusätzliche elektrische Überbrückung des Stellgliedes 6 vorzunehmen, so daß der Stromkreis zwischen Temperierglied 4 und Stellglied 7 geschlossen wird.

Gemäß Figur 4 ist das Auftreten eines Fehlerfalles erkennbar, wobei aufgrund eines Fehlers im Regelkreis (mit Ausnahme der Temperatur-Sensoren 11, 25) beide ermittelten Temperatursensor-Signalwerte S1 und S2 die Obergrenze OG des Fehler-Toleranzbandes W4 verlassen und erst nach Einsetzen der Regelung bei $t_2$ sich wiederum dem Mittelwert W bzw. W1 des Sollwertsignals zuwenden. Dies bedeutet, daß entweder Regler oder Stellglied einen Fehler aufweisen, wobei in diesem Falle das Stellglied sinngemäß auch das Temperierglied 4 mit einschließt.

Der besondere Vorteil dieser "Beschaltung" ist, daß in einem auftretenden Fehlerfall in der Regelstrecke wieder auf den vom Anwender gewünschten Temperatursollwert W1 abgeregelt werden kann und nur kurzfristig bis zum Erreichen der "Triggerschwelle" OG und Wiederabkühlen das Behandlungsgut einer Übertemperatur ausgesetzt wird.

**Patentansprüche**

1. Verfahren zur Temperatur-Regelung eines zu behandelnden Gutes in einer gegenüber der Umgebungssatmosphäre abgeschlossenen Atmosphäre eines Behandlungsraumes mittels Temperatur-Sollwert/-Istwert-Vergleich in einem ersten und in einem zweiten Regelkreis, wobei durch wenigstens zwei voneinander unabhängige Temperatur-Sensoren im Behandlungsraum ermittelte Temperatur-Istwerte einer Prüfung auf Plausibilität mit einem vorgegebenen Differenz-Schwellwert unterworfen werden, wobei eine Nichterfüllung der Plausibilitätsbedingung eine Signal-Ausgabe sowie eine Unterbrechung der Energiezufuhr zur Temperierung des Behandlungsraumes zur Folge hat, dadurch gekennzeichnet, daß bei Erfüllung der Plausibilitätsbedingung durch Über- oder Unterschreiten eines vorgegebenen Temperatur-Sollwertes (W1) um ein einstellbares Toleranzband (W4) die Regelung von dem ersten Regelkreis auf den zweiten Regelkreis mit Regler/Kontrollvorrichtung (8) und eigenem unabhängigen Stellglied (7) übertragen wird.

2. Verfahren nach Anspruch 1, dadurch gekennzeichnet, daß der Regler/Kontrollvorrichtung (8) den Temperatur-Sollwert (W1) des ersten Reglers übernimmt und wieder einregelt.

3. Verfahren nach Anspruch 1 oder 2, dadurch gekennzeichnet, daß die Regler/Kontrollvorrichtung (8) eine vom ersten Regelkreis unabhängige Temperatur-Regelung im Nutzraum vornimmt.

4. Verfahren nach Anspruch 1 oder 2, dadurch gekennzeichnet, daß bei Nichterfüllung der Plausibilitäts-Bedingung von der Regler/Kontrolleinrichtung ein Fehlersignal ausgegeben wird.

5. Vorrichtung zur Regelung der Temperatur eines in einem Behandlungsraum mit gegenüber der Umgebung abschließbaren Atmosphäre zu behandelnden Gutes, wobei wenigstens ein erster und ein zweiter Regelkreis vorgesehen sind, und jeweilige Eingänge für ein Istwert-Signal jeweils mit einem unabhängigen Temperatur-Sensor im Behandlungsraum verbunden sind, von denen ein erster mit einem ersten Eingang und ein zweiter (25) mit einem zweiten Eingang eines Vergleichsmoduls zwecks Istwert-Signal-Differenzwert-Bildung und folgender Plausibilitäts-Prüfung der Sensor-Signale auf Überschreiten eines vorgegebenen Differenz-Schwell-Wertes verbunden sind und der Ausgang wenigstens eines Reglers mit einem ansteuerbaren Stellglied zur Temperierung der Behandlungsraum-Atmosphäre verbunden ist, dadurch gekennzeichnet, daß der Ausgang des Vergleichmoduls (14) jeweils mit dem Eingang (17) eines Reglers (5) des ersten Regelkreises und dem Eingang einer Regler/Kontrollvorrichtung (8) als Regler des zweiten Regelkreises verbunden sind.

6. Vorrichtung nach Anspruch 5, dadurch gekennzeichnet, daß einer der beiden Temperatur-Sensoren (8) als Dünnschicht-Meßwiderstand und der andere (15) als digitaler Sensor auf Halbleiter-Basis ausgebildet ist.

7. Vorrichtung nach Anspruch 5 oder 6, dadurch gekennzeichnet, daß sowohl der digitale Sensor (15) als auch ein dem Temperatur-Sensor (8) mit Dünnschicht-Meßwiderstand und Verstärkerschaltung nachgeschalteter A/D-Wandler (34) über ein Bus-System mit einem Haupt-Prozessor als Teil des Vergleichsmoduls (14) verbunden sind.

8. Vorrichtung nach einem der Ansprüche 5 bis 7, dadurch gekennzeichnet, daß die Signalausgabe der Regler/Kontrollvorrichtung (8) mit einer Warneinrichtung und einem Stellglied verbunden ist.

9. Vorrichtung nach Anspruch 8, dadurch gekennzeichnet, daß das Stellglied von einem Regler der Regler/Kontrolleinrichtung (8) ansteuerbar ist.

10. Vorrichtung nach Anspruch 8, dadurch gekennzeichnet, daß das Stellglied der Regler/Kontrollvorrichtung (8) allpolig schaltbar ist.

11. Vorrichtung nach einem der Ansprüche 4 bis 8, dadurch gekennzeichnet, daß die Funktion von Vergleichsmodul (14), Regler (5) und Regler/Kontrollvorrichtung (8) durch Programmierung eines Digitalrechners erstellt ist.

Fig. 1

Ausgabe je/eines Plausibilitäts-Toleranzbandes W2 (Phase I) und W3 (Pase II) (A1)

Messung Temperatur-Istwert S1, S2 (A2)

(S1-S2) = $\triangle$S (A3)

$\triangle$S≤W2
$\triangle$S≤W3
n

akust./opt. Signal ausgeben
------
Mit Regler 32 (I) Heizungen bleibend abschalten (A4)

j

Ausgabe eines Temperatur-Sollwertes W1 und eines den Sollwert einhüllenden Fehlertoleranzbandes W4 (A5)

(W1-W4)≤S1≤(W1+W4)
n

opt./akust Signal ausgeben zu(A7)

Sollwert W1 in Regel/Kontrollvorrichtung (8) laden.
------
Regelung auf Sollwert W1 im Regelkreis II (A7)

j

Regelung im 1. Regelkreis (5,6) (A6)

**Fig. 2**

9

Fig. 3a

Fig. 3b

Fig. 4

Europäisches Patentamt

**EUROPÄISCHER RECHERCHENBERICHT**

Nummer der Anmeldung

EP 98 12 3398

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | US 4 692 598 A (YOSHIDA ET AL.) 8. September 1987 * Spalte 2, Zeile 50 - Spalte 4, Zeile 10; Abbildung 2 * --- | 1-3,5,9, 11 | G05D23/19 G05B9/03 |
| A | US 4 586 149 A (STILLMAN ET AL.) 29. April 1986 * Zusammenfassung * * Spalte 4, Zeile 3-68 * * Spalte 5, Zeile 24 - Spalte 6, Zeile 36 * * Spalte 8, Zeile 59 - Spalte 9, Zeile 6 * * Spalte 11, Zeile 51 - Spalte 12, Zeile 54; Abbildungen 1,2A * --- | 1,4,5, 7-9,11 | |
| A | PATENT ABSTRACTS OF JAPAN vol. 15, no. 169 (P-1196), 26. April 1991 & JP 03 034006 A (KYOCERA CORP), 14. Februar 1991 * Zusammenfassung * --- | 1-5,8,9, 11 | |
| A | PATENT ABSTRACTS OF JAPAN vol. 9, no. 285 (P-404), 12. November 1985 & JP 60 126702 A (TANIGUCHI KAZUMI ET AL.), 6. Juli 1985 * Zusammenfassung * --- | 1-5,8,9 | **RECHERCHIERTE SACHGEBIETE (Int.Cl.6)** G05D G05B B01L C12M |
| A | US 4 320 285 A (KOETHER) 16. März 1982 * Zusammenfassung * * Spalte 3, Zeile 49 - Spalte 4, Zeile 65; Abbildung 1 * --- | 1-3,5,8, 9 | |
| A | EP 0 004 035 A (COOPER INDUSTRIES INC.) 19. September 1979 * Zusammenfassung * * Seite 9, Zeile 5 - Seite 10, Zeile 9; Abbildung 1 * --- | 1,4,5,8, 9 | |

-/--

Der vorliegende Recherchenbericht wurde für alle Patentansprüche erstellt

| Recherchenort | Abschlußdatum der Recherche | Prüfer |
|---|---|---|
| BERLIN | 31. März 1999 | Beitner, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
............................................................
& : Mitglied der gleichen Patentfamilie, übereinstimmendes Dokument

**Europäisches Patentamt**

## EUROPÄISCHER RECHERCHENBERICHT

Nummer der Anmeldung

EP 98 12 3398

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | US 5 350 900 A (INAGE ET AL.) 27. September 1994 * Zusammenfassung * * Spalte 5, Zeile 10 – Spalte 7, Zeile 14; Abbildung 2 * --- | 1,8,9,11 | |
| A | GB 2 045 978 A (ELECTRO MEDICAL EQUIPMENT LIMITED) 5. November 1980 * Zusammenfassung; Abbildung 1 * --- | 1,4,5,8, 9 | |
| D,A | DE 31 00 273 A (KÖRTVELYESSY) 19. August 1982 ----- | 1 | |
| | | | RECHERCHIERTE SACHGEBIETE (Int.Cl.6) |

Der vorliegende Recherchenbericht wurde für alle Patentansprüche erstellt

| Recherchenort | Abschlußdatum der Recherche | Prüfer |
|---|---|---|
| BERLIN | 31. März 1999 | Beitner, M |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
..............................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                    EP 98 12 3398

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-03-1999

| Im Recherchenbericht angeführtes Patentdokument | Datum der Veröffentlichung | Mitglied(er) der Patentfamilie | Datum der Veröffentlichung |
|---|---|---|---|
| US 4692598 A | 08-09-1987 | JP 59071501 A<br>DE 3337170 A<br>GB 2128778 A,B | 23-04-1984<br>19-04-1984<br>02-05-1984 |
| US 4586149 A | 29-04-1986 | KEINE | |
| US 4320285 A | 16-03-1982 | KEINE | |
| EP 4035 A | 19-09-1979 | DE 2809089 A<br>JP 54160539 A | 13-09-1979<br>19-12-1979 |
| US 5350900 A | 27-09-1994 | JP 5027643 A<br>GB 2258929 A,B | 05-02-1993<br>24-02-1993 |
| GB 2045978 A | 05-11-1980 | KEINE | |
| DE 3100273 A | 19-08-1982 | KEINE | |

EPO FORM P0461

Für nähere Einzelheiten zu diesem Anhang : siehe Amtsblatt des Europäischen Patentamts, Nr. 12/82